# EUROPEAN PATENT APPLICATION

(11) **EP 2 186 693 A1**
(43) Date of publication of application: **19.05.2010**
(21) Application number: 08169164.4
(22) Date of filing: 14.11.2008
(51) Int. Cl.: B60R 25/02

(54) **Detachable steering wheel connection structure**

(71) Applicant: Gussi Marine Products AB, 451 75 Uddevalla (SE)
(72) Inventor: Gustavsen, Eirik, 444 96, Ödsmål (SE)
(74) Representative: Valea AB

(57) **Abstract**

A detachable steering wheel connection structure (2) intended to be located between a removable steering wheel (10) and a steering wheel hub (8). The structure comprises a first (4) and a second (6) connection part. One of the first and second connection parts is adapted to be rigidly connected to the steering wheel, while the other is adapted to be rigidly connected to the steering wheel hub. One of the connection parts comprises a release means (12), which is axially movable between a first and a second position. In the first position the release means prevents relative movement between the first and second connection parts, thereby keeping them in an interconnected state. In the second position the release means allows for relative rotational movement between the first and second connection parts, thereby allowing them to be moved to a rotational position, wherein they are detachable from each other by movement in an axial direction (A).

## Description

### TECHNICAL FIELD

The present invention relates to a detachable steering wheel connection structure for connecting and disconnecting a steering wheel to/from a steering wheel hub.

### BACKGROUND OF THE INVENTION

Steering wheels are commonly used in vehicles, e.g. cars, and vessels, e.g. boats. Unfortunately, such vehicles and vessels are attractive for thieves. To prevent theft, various kinds of anti-theft devices are known, e.g. electronic alarms and steering wheel locks.

However, with these conventional anti-theft devices, once a thief has broken the lock or shut off the alarm, the thief can steal the vehicle or vessel and drive away. In order to make theft more difficult, it is known to use removable steering wheels. Hence, the steering wheel may be removed by the proper user/ owner when leaving the vehicle or vessel. Without a steering wheel, it will be difficult for a thief to drive away.

GB 298, 047 discloses an anti-theft device of the type in which the steering wheel can be coupled or uncoupled with the steering column. The steering wheel may take up two positions, in the lower of which it engages the steering column, while in the upper it rotates idly thereon. The hub of the wheel is formed with internal teeth, which, in the lower position engage external teeth on a flange secured to the column. The wheel is locked in one position or the other by means of a toothed ring operated by a key k through toothed wheels.

With this kind of anti-theft devices preventing operation of the steering wheel, the purpose is to render it difficult for the thief to steal the vehicle or vessel. At the same time it should be convenient for the proper user/owner of the vehicle or vessel to couple or uncouple the steering wheel. It is preferred that the uncoupling of the steering wheel is quick and easy, so that the anti-theft function is actually used. If it is too complicated to perform the detachment, some persons would not use the anti-theft device, although it is already installed in their vehicle or vessel. Especially, it is preferred that no extra tool or key is needed for detachment and re-connection. For convenience, as few grips as possible should be needed to uncouple the steering wheel. Preferably it should be possible without shifting the grip. Yet it should be a safe construction so that the steering wheel is not uncoupled unintentionally.

Conventional detachable steering wheel connection structures are often locked and unlocked by a key in a lock. In that case, there is always a risk of losing the key. There is also a risk that the thief actually breaks the lock and manages to drive away the vehicle or vessel anyway.

There is therefore a need for an improved detachable steering wheel connection structure.

### SUMMARY OF THE INVENTION

The object of the present invention is to overcome or ameliorate at least one of the disadvantages of the prior art, or to provide a useful alternative.

Preferably, a detachable steering wheel connection structure is provided which needs as few grips as possible for uncoupling.

Advantageously, a detachable steering wheel connection structure is provided which is handled without the need of a lock and corresponding key.

The object above may be achieved by the invention according to claim 1.

In a first aspect of the present invention there is provided a detachable steering wheel connection structure intended to be located between a removable steering wheel and a steering wheel hub. The structure comprises a first and a second connection part. One of the first and second connection parts is adapted to be rigidly connected to the steering wheel, while the other is adapted to be rigidly connected to the steering wheel hub. One of the connection parts comprises a release means, which is axially movable between a first and a second position. In the first position the release means prevents relative movement between the first and second connection parts, thereby keeping them in an interconnected state. In the second position the release means allows for relative rotational movement between the first and second connection parts, thereby allowing them to be moved to a rotational position, wherein they are detachable from each other by movement in an axial direction.

The steering wheel connection structure according to the present invention may be operated without the use of a key. In the normal case, the whole steering wheel is removed after having detached the steering wheel connection structure. A possible thief just finds a "naked" steering wheel hub and cannot drive away. There is therefore no need for a key-operated lock.

Another advantage of the suggested the steering wheel connection structure is that it is possible to operate with only one grip. The person wanting to detach the structure, may place his hands close to the hub of the steering wheel, move the release means from the first to the second position, rotate the first and second connection parts relative to each other and detach them. All these operations could be done without shifting grip, providing a one-grip solution, which is very convenient.

As the release means is moved axially and the connection parts are rotated, there are two different directions of movement involved, occurring one after the other. Thereby the risk of unintentional detachment of the connection structure is diminished. Another advantage of having different movements is that, in the event of unexpected external forces e.g. in a crash situation, these forces will work in mainly one direction and thus not detach the steering wheel unintentionally.

The detachable steering wheel connection structure can be arranged so that the release means is only movable in the axial direction between the first and second position.

The release means may be connected to either the first or second connection part. Thereby it cannot fall off and disappear. If the connection part whereto the release means is connected is rotated as described above, the release means will rotate together with that connection part, but no movement between the first and second position of the release means is occurring.

The detachable steering wheel connection structure may be arranged so that the first connection part is adapted to be rigidly connected to the steering wheel hub and the second connection part is adapted to be rigidly connected to the steering wheel.

The first and second connection parts may be arranged so that there during the rotational movement is at least one detachable position, wherein the connection parts are detachable from each other by axial movement, and at least one non-detachable position, wherein they are only movable relative to each other by the rotation. This arrangement helps to keep the rotational movement separate from the axial movement of detachment.

In one embodiment, the first and second connection parts are hindered from moving relative to each other by a protrusion from the release means engaging with at least one of the connection parts, when the connection parts are in the interconnected state and the release means is in the first position. The protrusion helps to prevent unintentional detachment. Such a protrusion could for example be useful in making the connection structure stable in case of a crash.

In one embodiment, the first connection part comprises a first part and a first lock means with the first lock means being rigidly connected to the first part. The second connection part comprises a second part and a second lock means, with the second lock means being rigidly connected to the second part. The first and the second lock means engage with each other when being in the at least one non-detachable position and disengage with each other in the at least one detachable position. This arrangement facilitates an efficient manufacturing of the steering wheel connection structure.

The first and second lock means may be annular rings having teeth and recesses. One of them has teeth and recesses around its inner diameter and the other around its outer diameter. The teeth and recesses correspond to each other, such that they can pass through each other in the at least one detachable position and such that they engage with each other in the at least one non-detachable position. The teeth and recess arrangement keeps the lock means and thereby the connection parts well attached to each other, especially if the teeth are distributed around the whole perimeter. In the non-detachable position, there may be a tooth under every recess. This would give a stable connection, which is good to withstand external forces, for example in the event of a crash.

The release means may have the form of an annular ring. A circular form is suitable since the steering wheel hub usually is round. It is also easy to move an annular ring between the first and second position of the release means.

The release means may be biased towards the first position, e.g. by a compressible or extendible resilient means. Thereby the release means will strive to be in the first position, so that when the release means is released from the second position, it will automatically return to the first position. The release means will then only be in the second position, when it is actively moved there, which diminishes the risk of unintentional detachment of the connection structure.

In order to obstruct theft, the connection structure may further comprise at least one identity means, being attached to one of the connection parts. In this case the release means may have a corresponding receiving identity slot. The identity means is then received by the identity slot, when the two connection parts are mounted to each other. In one embodiment, the identity means has a predetermined location, such that a certain first connection part only is connectable to a mating second connection part of the same connection structure. The identity means is used to individualize the connection structure, so that a possible thief cannot take any loose steering wheel with a connection part and put it on a steering wheel hub with the steering wheel removed. The purpose is to make sure that only the mating connection part fits, so that only the correct connection part of the correct steering wheel can be used.

In a second aspect of the present invention, there is provided a steering wheel comprising a detachable steering wheel connection structure as described above.

In a third aspect of the present invention there is provided a method of detaching a detachable steering wheel connection structure comprising the steps of:
- moving a release means axially from a first to a second position,
- rotating first and second connection parts relative to each other,
- separating the first and second connection parts from each other by axial movement, wherein the connection parts and release means are as described above.

Since the detachment involves three different movements, the risk of unintentional detachment is diminished. At the same time the detachment movements are easy to perform. They are convenient, since they could be made without shifting grip. Also, detachment may be made quickly. Yet, at the same time, unintentional detachment is prevented.

In a fourth aspect of the present invention, there is provided a method of connecting a detachable steering wheel connection structure comprising the steps of:
- placing the first and second connection parts in contact to each other in the at least one detachable position,
- rotating the first and second connection parts relative to each other until they reach the at least one non-detachable position,
wherein the connection parts and release means are as described above.

By means of placing the two connection parts on top of each other, the release means is moved to its second position, which allows relative rotational movement. If the release means is biased towards the first position, as in one of the embodiments described above, it will return to the first position automatically, otherwise it may be moved back manually.

The connection could be performed quick and easy, without the use of keys or tools, yet a stable connection is provided.

### BRIEF DESCRIPTION OF THE DRAWINGS

The present invention will hereinafter be explained in greater detail by means of nonlimiting examples and with reference to the appended drawings in which:
- Fig 1: is a schematic side view of a detachable steering wheel connection structure according to a first embodiment of the invention;
- Fig 2: is a top view of the detachable steering wheel connection structure of Fig 1;
- Fig 3: is a cross-sectional view from the side of the detachable steering wheel connection structure of Fig 1;
- Fig 4a-c: is a bottom, top and cross-sectional side view of a bottom part;
- Fig 5a-b: is a top and cross-sectional view of a first lock means;
- Fig 6a-c: is a top, bottom and cross-sectional side view of a top part;
- Fig 7a-b: is a top and cross-sectional view of a second lock means;
- Fig 8a-c: is a top, bottom and cross-sectional side view of a release means.

The words top and bottom relate to when the connection structure is mounted to the steering wheel hub of a normal steering of a vehicle or vessel.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention, defined by the appended claims.

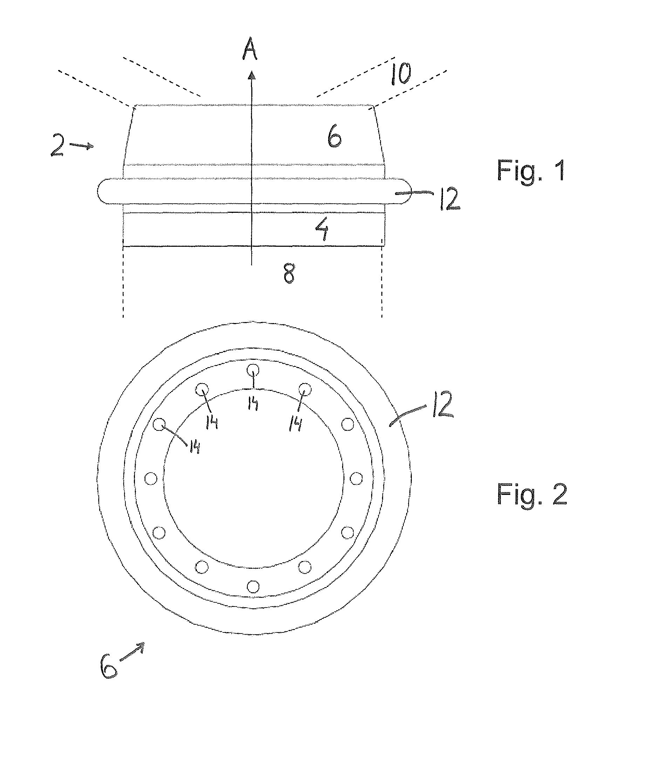

Fig 1 - 8 illustrate a detachable steering wheel connection structure 2 according to a first embodiment of the invention. Fig 1 shows a side view of the connection structure 2. It comprises a first connection part 4 and a second connection part 6. In this example, the first connection part 4 is intended to be rigidly connected to the steering wheel hub 8 and the second connection part to the steering wheel 10, but the connection structure 2 may also be mounted upside down with the first connection part 4 connected to the steering wheel 10 and the second connection part 6 to the steering wheel hub 8. The steering wheel hub 8 has an axial direction A.

A release means 12 is connected to the second connection part 6 in such a way that it is movable in the axial direction A of the steering wheel hub between a first and a second position.

Fig 2 displays the connection structure 2 from above. In this example the second connection part 6 has a number of cavities 14 intended to receive fastening means, e.g. screws, connecting the second connection part 6 to the steering wheel 10. The release means 12 surrounds the second connection part 6.

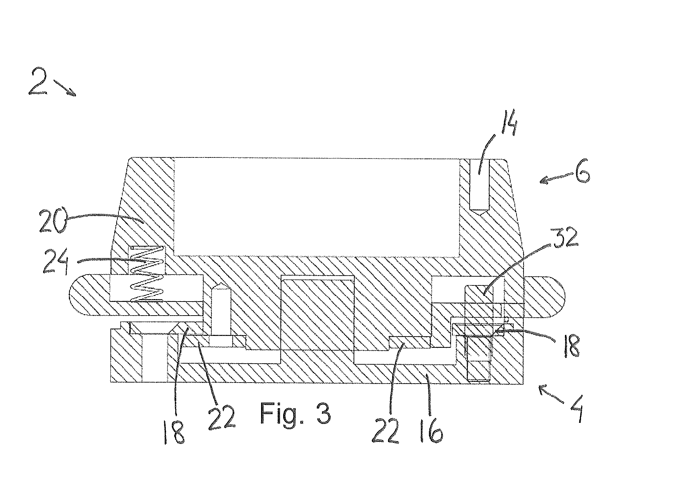

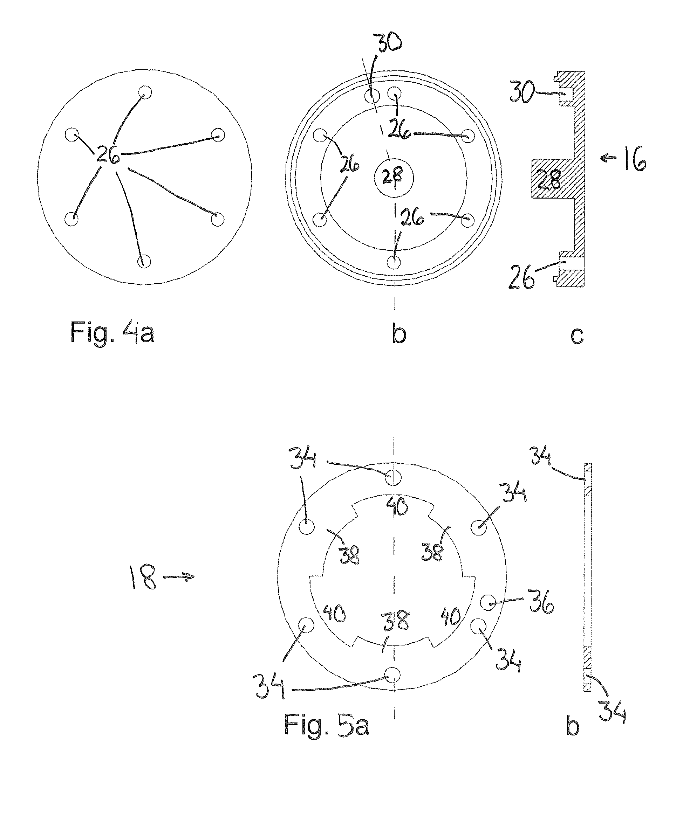

Fig 3 illustrates a cross-section of the connection structure 2. The first connection part 4 comprises a bottom part 16 and a first lock means 18. The second connection part 6 comprises a top part 20 and a second lock means 22. The release means 12 is connected to the second connection part 6, in such a way that the release means 12 is axially movable relative to the second connection part 6 as described above. The release means 12 is biased towards the first connection part 4 by means of a resilient structure 24. The individual parts will be more detailed described with the help of Fig 4-8.

The directions downwards and upwards, as well as the words top and bottom, relate to when the connection structure is mounted to the steering wheel hub.

Fig 4a-c shows the bottom part 16 from below, above and as cross-section from the side. Cavities 26 are intended to receive screws (not shown) for fastening the first connection part 4 to the steering wheel hub 8. In the centre of the bottom part 16, a projection 28 extends in the axial direction A. In the illustrated example, there is an extra cavity 30, intended to receive an identity means 32. The cross-section in Fig 4c is along the dashed line of Fig 4b, so that both the cavity 26 and extra cavity 30 can be seen. The identity means 32 can also be seen in Fig 3. The identity means is an optional solution which makes it possible to individualize a connection structure by choosing the location of the identity means. The identity means could e.g. be a pin. There is a corresponding identity slot 56 in the release means which is intended to receive identity means, which will be further explained below. The identity means 32 is used to prevent that a steering wheel with a first connection part 4 fits to any second connection part 6. With the identity means it is made sure that the first connection part 4 and the second connection part 6 come from the same connection structure 2.

The first lock means 18 is shown in Fig. 5a-b. The holes 34 correspond to the cavities 26 of the bottom part 16. There is an extra hole 36 corresponding to the extra cavity 30. Along its inner perimeter the first lock means 18 is provided with a contour having alternatively teeth 38 and recesses 40. It is preferred that first lock means 18 is rotational-symmetric, but it is not necessary. The same screws (not shown) which fasten the bottom part 16 to the steering wheel hub 8 may also be used to fasten the first lock means 18 to the bottom part 16.

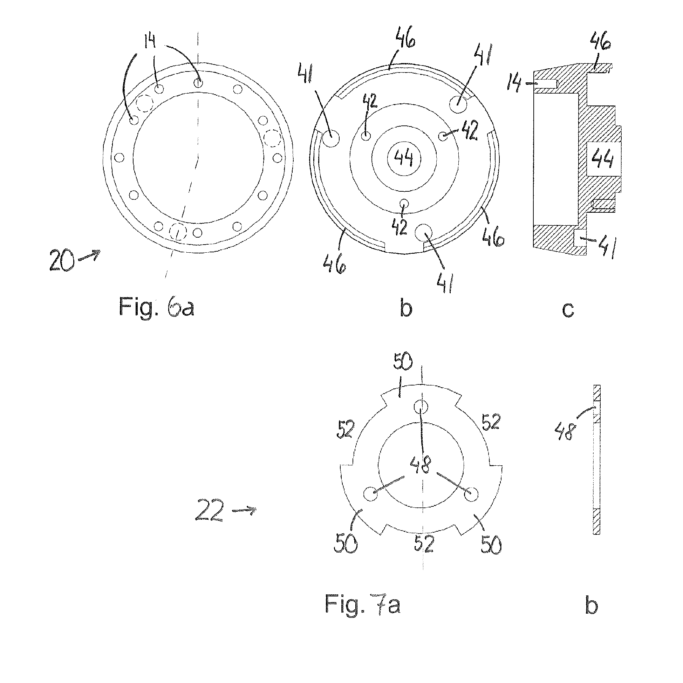

Fig 6a-c illustrates the top part 20 as seen from above, below and in cross-section from the side. A number of cavities 14 are intended to receive the fastening means for the steering wheel 10. There are also a number of spring cavities 41, in the example three, intended to receive the resilient means, here in the form of springs. Another set of cavities 42 are intended for fastening means, e.g. screws, connecting the second lock means 22 to the top part 20. There is further a large cavity 44 intended to receive the projection 28 of the bottom part 16. Along the rim, there are projections 46, in this case three, extending downwards towards the first connection part 4. The cross-section in Fig 6c is done, so that both a cavity 14 for fastening means and a spring cavity 41 can be seen.

The second lock means 22 is shown in Fig 7a-b. It has holes 48 corresponding to the cavities 42 of the top part 20. On its outer rim it is provided with a contour having alternatively teeth 50 and recesses 52. The first 18 and second 22 lock means match each other, so that the teeth 38 of the first lock means 18 fit the recesses 52 of the second lock means 22, and the recesses 40 of the first lock means 18 fit the teeth 50 of the second lock means 22. In the detachable position the second lock means 22 is able to pass through the first lock means 18 in the axial direction. The first 4 and second 6 connection parts are thus detachable from each other. By a relative rotational movement, rotation around the axis A, the first 18 and second lock means 22 move to the non-detachable position, wherein the first 4 and second 6 connection parts cannot be detached from each other. The second lock means 22 then prevent the first lock means 18 from moving in the axial direction. The non-detachable position is reached when the teeth 38 of the first lock means 18 is just above the teeth 50 of the second lock means 22. With the illustrated geometry this is achieved by 60° rotation, but depending on the number and shape of the teeth any predetermined angle could be chosen. In the intermediate positions between the detachable and non-detachable position, the first 18 and second 22 lock means have partly overlapping teeth thereby blocking each other from axial movement, but it is only in the non-detachable position that they can be locked by the protrusions 58 of the release means 12, as described below.

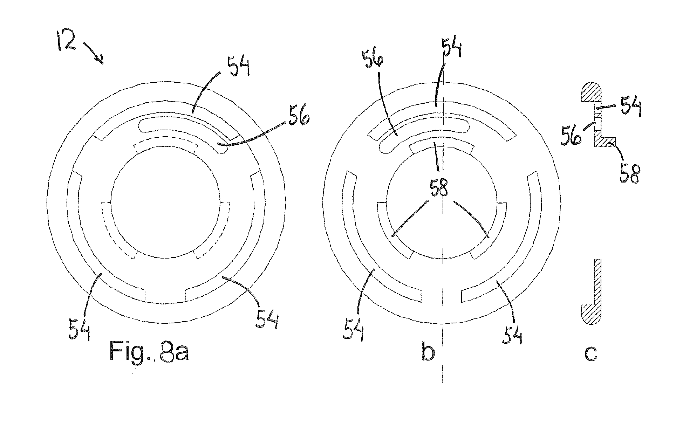

The release means 12 as illustrated in Fig 8a-c has a number of slots 54 intended to receive the projections 46 of the top part 20. The slots 54 make it possible for the release means 12 to move in an axial direction relative to the top part 20, but prevent rotational movement between the release means 12 and the top part 20. There is also provided an identity slot 56 intended to receive the identity means 32. The arc length of the identity slot 56 corresponds to the rotation needed to move between the detachable and non-detachable positions of the lock means 18, 22 mentioned above, in this case 60°. The release means 12 further comprises protrusions 58. The protrusions 58 have a shape that fits into the recesses 40 of the first lock means 18.

Going back again to Fig 3, it is illustrated that the first and second lock means are in a non-detachable position. On the left-hand side of the connection structure, it can be seen that the teeth of the first lock means 18 overlap the teeth of the second lock means 22. The release means 12 is in its first position preventing relative movement. It can be seen that the protrusions 58 of the release means 12 fit into the recesses 52 of the second lock means 22. When the release means 12 is in its first position, these protrusions 58 are located in the recesses 40 of the first lock means 18, thereby preventing relative movement between the first 4 and second 6 connection parts.

When the release means 12 is moved to its second position, in this example by moving the release means 12 upwards against the force of the resilient means 24, the protrusions 58 are lifted out of the recesses 40 of the first lock means. With the protrusions 58 free from the recesses 40, the first connection part 4 is allowed to move relative to the second connection part 6 with rotational movement around the axis A. The connection parts 4, 6 can then be rotated the predetermined angle mentioned above, in this case 60°, so that they reach the detachable position, wherein the connection parts 4, 6 are detachable from each other and the steering wheel 10 can be disconnected from the steering wheel hub 8.

The invention has been described above by way of example only and the skilled person will appreciate that many modifications of the above-described embodiments are conceivable within the scope of the appended claims.

The used 60° geometry is just an example. The teeth 38, 50 and recesses 40, 52 could have any arc length or shape as long as the first lock means 18 can pass through the second lock means 22, in the detachable position, and then be moved to the non-detachable position, wherein the connection parts 4, 6 are locked by each other. It is usually preferred to let the teeth and recesses have the same arc length. The teeth 38, 50 could have another geometry than the recesses 40, 52, e.g. have a longer or shorter arc length. The example shows three teeth, but instead another number of teeth could be used. For example using four teeth and recesses with the same arc length, each tooth could be 45° and the predetermined rotation angle also 45°. In the same way, using two teeth would correspond to 90°. Using only one tooth is less preferred, since the connection between the two connection parts 4, 6 would be unbalanced with the whole connection in one half of the connection parts. On the other hand, using too many teeth is not good either, since the predetermined angle to rotate becomes small, increasing the risk of unintentional detachment.

The identity means 32 is an option, which secures that the first and second connection parts belong to the same connection structure. By choosing the location of the identity means 32, it is possible to individualize a connection structure. As an alternative two, three, four or more identity means may be used.

Suitable materials for the connection structure are metals and alloys, for example aluminum, stainless steel and alloys comprising aluminum, copper, zinc and/or iron. A good choice is aluminum alloy, which is suitable from a manufacturing point of view.

In the illustrated example the connection parts 4, 6 comprise more than one individual part. This is useful from a manufacturing point of view, but it would also be possible to make the first 4 and second 6 connection parts as integrated units, manufactured in one piece.

The exemplary parts in Fig 4 to 8 are all rotational-symmetric. This is rather natural considering the application in a steering system, but it is not a must. One or more of the parts could for example be polygonal, e.g. square, hexagonal or octagonal. If desired, the number of teeth could be matched to the number of sides in the polygon.

The purpose of the release means 12 is to on one hand, being in the fist position, prevent relative movement of the first 4 and second 6 connection part, and on the other hand, being in the second position allow relative rotational movement of the first 4 and second 6 connection parts. In the second position, the first 18 and second locking means 22 are prevented from uncoupling. In this particular illustrated case, relative movement is prevented by locating protrusions 58 in the recesses 40. This locking effect could also be achieved in other ways, e.g. by letting a protrusion or a pin attached to the release means 12 fit into a receiving cavity in the first connection part.

The exemplary release means 12 has the form of an annular ring surrounding the axis A. The diameter is somewhat larger than that of the first and second connection part to facilitate the movement between the first and second position. However, the release means 12 could instead for example comprise a lever or a grip protruding from the connection structure. The lever/grip would then be used for enabling the movement between the first and second position. The lever/grip could be done as an integral part of the release means, but it could also be manufactured of another material and attached to the release means.

A procedure for detaching the connection structure 2 of Fig 1-8 comprises the steps of:
(a) moving the release means 12 axially from the first to the second position,
(b) rotating the connection parts 4, 6 relative to each other,
(c) separating the first and second connection parts from each other by axial movement. Since the procedure involves three distinct steps, which are carried out in a certain order, it is highly unlikely that they would occur unintentionally.

A procedure for connecting the connection structure 2 of Fig 1-8 comprises the steps of:
(a) placing the first and second connection parts 4, 6 in contact to each other in the at least one detachable position,
(b) rotating the first and second connection parts 4, 6 relative to each other until they reach the at least one non-detachable position.

The release means is moved to the second position when placing the connection parts 4, 6 in contact to each other, step (a). The release means 12 may be biased, e.g. by a resilient means 24 as in Fig 1-8. In that case, the release means 12 is moved to the second position against the force of the resilient means 24 when placing the connection parts 4, 6 in contact to each other, step (a). After rotation to the at least one non-detachable position, step (b), the release means 12 automatically returns to the first position when released. If not biased, it might be moved back manually.

In Fig 1-8 the connection structure is operated by moving the release means axially and rotating the locking means. The reverse would also possible, moving the locking means axially in and out of a matched position, and letting the release means rotate between the first and second position. Even if it would be possible that the release and the locking means either both rotate or move axially, it is preferred that they have different movements, since that diminishes the risk of unintentional detachment of the connection structure.

Another advantage of having different movements is, is in the event of unexpected external forces, e.g. in a crash situation. These forces will work in mainly one direction and thus not detach the steering wheel unintentionally.

It would also be possible to replace the movements of at least one of the steps (a) to (c) of the detachment method with a translational movement perpendicular to the axis A.

## Claims

1. A detachable steering wheel connection structure (2), said structure intended to be located between a removable steering wheel (10) and a steering wheel hub (8), said structure comprising a first (4) and a second connection part (6);
one of said first and second connection parts being adapted to be rigidly connected to said steering wheel (10),
the other of said first and second connection parts being adapted to be rigidly connected to said steering wheel hub (8),
**characterized in that**
one of said connection parts (4, 6) comprising a release means (12), said release means being axially movable between a first and a second position,
wherein said release means (12) in said first position prevents relative movement between said first and second connection parts (4, 6), thereby keeping them in an interconnected state, and,
wherein said release means (12) in said second position allows for relative rotational movement between said first and second connection parts (4, 6), thereby allowing them to be moved to a rotational position, wherein they are detachable from each other by movement in an axial direction (A).

2. The detachable steering wheel connection structure (2) according to claim 1, wherein the release means (12) is only movable in the axial direction between the first and second position.

3. The detachable steering wheel connection structure (2) according to claim 1 or 2, wherein the release means (12) is connected to either the first or second connection part (4, 6).

4. The detachable steering wheel connection structure (2) according to any of the proceeding claims, wherein the first connection part (4) is adapted to be rigidly connected to the steering wheel hub (8) and the second connection part (6) is adapted to be rigidly connected to the steering wheel (10).

5. The detachable steering wheel connection structure (2) according to any of the proceeding claims, wherein during said rotational movement there is at least one detachable position, wherein the first and second connection parts (4, 6) are detachable from each other by axial movement, and at least one non-detachable position, wherein said first and second connection parts (4, 6) are only movable relative to each other by said rotation.

6. The detachable steering wheel connection structure (2) according to according any of the preceding claims, wherein, when the first and second connection parts (4, 6) are in said interconnected state and the release means (12) is in the first position, said connection parts are hindered from moving relative to each other by a protrusion (58) from said release means (12) engaging with at least one of the connection parts.

7. The detachable steering wheel connection structure (2) according to any of the preceding claims, wherein
the first connection part (4) comprises a first part (16) and a first lock means (18), said first lock means being rigidly connected to said first part,
said second connection (6) part comprises a second part (20) and a second lock means (22), said second lock means being rigidly connected to said second part, and
said first and said second lock means engage with each other when being in the at least one non-detachable position and disengage with each other in the at least one detachable position.

8. The detachable steering wheel connection structure (2) according to claim 7, wherein the first and second lock means (18, 22) are annular rings having teeth (38, 50) and recesses (40, 52), one of said first and second look means (18, 22) having teeth and recesses around its inner diameter and the other having teeth and recesses around its outer diameter, said teeth and recesses corresponding to each other, such that in said first and second lock means can pass through each other in the at least one detachable position and such that they engage with each other in the at least one non-detachable position.

9. The detachable steering wheel connection structure (2) according to any of the preceding claims, wherein the release means (12) has the form of an annular ring.

10. The detachable steering wheel connection structure (2) according to any of the preceding claims, wherein the release means (12) is biased towards the first position.

11. The detachable steering wheel connection structure (2) according to claim 10, wherein the release means (12) is biased towards the first position by a resilient means (24), which is compressible or extendible for enabling movement of said release means (12) to the second position.

12. The detachable steering wheel connection structure (2) according to any of the preceding claims, wherein said structure further comprises at least one identity means (32), said identity means being attached to one of the connection parts (4, 6) and the release means (12) having a corresponding receiving identity slot (56), said identity means (32) being received by said identity slot (56), when said two connection parts (4, 6) are mounted to each other.

13. The detachable steering wheel connection structure (2) according to claim 12, wherein said identity means (32) has a predetermined location, such that a certain first connection part (4) only is connectable to a mating second connection part (6) of the same connection structure (2).

14. A steering wheel (10) with a detachable steering wheel connection structure (2) according to any of the preceding claims.

15. A method for detaching a detachable steering wheel connection structure (2), said structure intended to be located between a removable steering wheel (10) and a steering wheel hub (8), said structure comprising a first (4) and a second (6) connection part;
one of said first and second connection parts being adapted to be rigidly connected to said steering wheel (10), and the other of said first and second connection parts being adapted to be rigidly connected to said steering wheel hub (8),
**characterized by**
said method comprising the steps of:
- moving a release means (12) axially from a first to a second position,
- rotating said first and second connection parts relative to each other,
- separating the first and second connection parts (4, 6) from each other by axial movement,
wherein said release means (12) in said first position prevents relative movement between said first and second connection parts (4, 6), thereby hindering detachment of said first and second connection parts (4, 6) from each other, and, wherein said release means (12) in said second position allows for relative rotational movement between said first and second connection parts (4, 6), thereby allowing them to be moved to a rotational position, wherein they are detachable from each other by movement in an axial direction (A).

16. The method according to claim 15, wherein the release means (12) only is moved in the axial direction (A) when moving it from the first to the second position.

17. A method for connecting a detachable steering wheel connection structure (2), said structure intended to be located between a removable steering wheel (10) and a steering wheel hub (8), said structure comprising a first and a second connection part (4, 6);
one of said first and second connection parts (4, 6) being adapted to be rigidly connected to said steering wheel (10), and the other of said first and second connection parts (4, 6) being adapted to be rigidly connected to said steering wheel hub (8),
**characterized by**
said method comprising the steps of:
- placing said first and second connection parts (4, 6) in contact to each other in the at least one detachable position,
- rotating said first and second connection parts relative to each other until they reach the at least one non-detachable position,
wherein a release means (12) is moved to the first position, when said connection parts (4, 6) are in said at least one non-detachable position,
wherein said release means (12) in said first position prevents relative movement between said first and second connection parts (4, 6), thereby hindering detachment of said first and second connection parts (4, 6) from each other.
